# EUROPÄISCHE PATENTANMELDUNG

(11) **EP 2 090 166 A1**
(43) Veröffentlichungstag der Anmeldung: **19.08.2009**
(21) Anmeldenummer: 08002708.9
(22) Anmeldetag: 14.02.2008
(51) Int. Cl.: A01N 43/12, A01N 43/54, A01N 47/22, A01P 13/00

(54) **Flüssige herbizide Zubereitungen**

(71) Anmelder: Bayer CropScience AG, 40789 Monheim (DE)
(72) Erfinder: Johann, Gerhard, Dr., 51399 Burscheid (DE); Bickers, Udo, Dr., 65779 Kelkheim (DE); Sixl, Frank, Dr., 26529 Rechtsupweg (DE); Denner, Mandy, 65239 Hochheim (DE); Buckpesch, Rainer, 65719 Hofheim (DE)

(57) **Zusammenfassung**

Herbizide Öldispersionen, **dadurch gekennzeichnet, dass** sie
(a) Desmedipham und/oder Phenmedipham, Ethofumesate und Lenacil
(b) ein oder mehrere Tenside,
c) ein oder mehrere möglichst polare, zugleich aber wasserunlösliche oder bis 5 g/l in Wasser lösliche Verbindungen aus der Gruppe der vollständig veresterten organische Phosphate und vollständig veresterten Phosphonate als Lösungsmittel,
d) gegebenenfalls weitere organische Lösungsmittel
e) gegebenenfalls weitere übliche Formulierungshilfsmittel,
f) gegebenenfalls Wasser

enthalten, sind stabile Formulierungen und eignen sich zur Bekämpfung von Schadpflanzen, besonders zur selektiven Bekämpfung in Rübenkulturen.

## Beschreibung

Die Erfindung betrifft das technische Gebiet der Zubereitungen (Formulierungen) von Pflanzenschutzmittelwirkstoffen, genauer das Gebiet der Coformulierungen, d. h. der Zubereitung mehrerer Pflanzenschutzmittelwirkstoffe in einer Formulierung. Speziell betrifft die Erfindung flüssige Coformulierungen von Pflanzenschutzmitteln zur Kontrollen von Schadpflanzen in dikotylen Kulturen, wie Rübenkulturen, vorzugsweise Zuckerrübenkulturen.

Für die Schadpflanzenkontrolle in Rübenkulturen sind strukturell unterschiedliche Einzelwirkstoffe zugelassen. Zur optimierten Anwendung werden häufig ein oder mehrere dieser Wirkstoffe kombiniert verwendet, um die Eigenschaften der Einzelwirkstoffe bei einer Anwendung gemeinsam nutzen zu können (Erweiterung des Schadpflanzenspektrums, Schließen von Wirkungslücken) oder auch weil die Einzelwirkstoffe in der Kombination synergistisch sind, d. h. vorteilhafte überadditive Wirkungssteigerungen ergeben. Die gemeinsame Anwendung von Wirkstoffen hat naturgemäß vielfältige technische Aspekte, je nachdem, ob die Wirkstoffe erst in einer Tankmischung kombiniert oder bereits als lagerfähige Fertigmischung bereitgestellt werden sollen.

Zunächst werden Einzelwirkstoffe oder Wirkstoffmischungen im Allgemeinen nicht als Reinstoffe, sondern je nach Anwendungsgebiet und gewünschter physikalischer Beschaffenheit der Anwendungsform in Kombination mit bestimmten Hilfsstoffen eingesetzt, d. h. sie werden "formuliert". Pflanzenschutzmittelwirkstoffe können auf unterschiedliche Art formuliert werden, je nachdem welche biologischen und/oder chemisch-physikalischen Parameter vorgegeben sind. Allgemein kommen dabei als Formulierungsmöglichkeiten beispielsweise in Betracht: Spritzpulver (WP), ÖI-in-Wasser- bzw. Wasser-in-ÖI-Emulsionen (EW bzw. EO), Suspensionen (SC), Suspoemulsionen (SE), emulgierbare Konzentrate (EC) oder auch Granulate zur Boden- oder Streuapplikation bzw. wasserdispergierbare Granulate (WG). Die genannten Formulierungstypen sind im Prinzip bekannt und werden z. B. beschrieben in: Winnacker-Küchler, "Chemische Technologie", Band 7, C.Hanser-Verlag, München, 4.Auflage 1986; van Valkenburg, "Pesticide Formulations", Marcel-Dekker N.Y., 1973; K.Martens, "Spray Drying Handbook", 3rd Ed., 1979, G.Goodwin Ltd. London.

Handelt es sich bei den zu formulierenden Wirkstoffen um solche geringer Polarität, z. B. nicht salzartige oder überwiegend hydrophobe Reste enthaltende und daher in Wasser kaum lösliche Verbindungen, sind die Formulierungsmöglichkeiten naturgemäß eingeschränkt. Dies trifft beispielsweise auf herbizide Wirkstoffe wie Desmedipham (DMP) und Phenmedipham (PMP) zu, die der Gruppe der Biscarbamate angehören und deren Wasserlöslichkeit 7 mg/l bzw. 4,7 mg/l beträgt. Ähnlich verhält es sich mit herbiziden Wirkstoffen aus der Gruppe der Benzofuranylsulfonate wie Ethofumesat (Wasserlöslichkeit: 50 mg/l) oder Benfuresat (Wasserlöslichkeit: 261 mg/l).
Als ein weiterer Wirkstoff, der zur Schadpflanzenkontrolle in Rübenkulturen angewendet wird, ist Lenacil bekannt, ein Wirkstoff aus der Strukturklasse der Uracile (= Pyrimidindione). Weiterhin ist bekannt, dass man Lenacil mit andereren Pflanzenschutzwirkstoffen wie Phenmedipham oder Ethofumesate kombinieren kann, beispielsweise in Tankmischungen oder einigen Fertiformulierungen; siehe beispielsweise "The Pesticide Manual", British Crop Protection Council, 14. Auflage 2006. Auch Lenacil weist mit 3 mg/l eine vergleichsweise geringe Wasserlöslichkeit auf.

Flüssigformulierungen einiger Herbizide der vorstehend aufgeführten Art sind bereits bekannt. So werden beispielsweise in WO-A-85/01286 Flüssigformulierungen beschrieben, die PMP und/oder Metamitron enthalten. Als Lösungsmittel werden in diesem Zusammenhang Ester von Polyalkoholen, Ether, Ketone, in Wasser unlösliche Alkohole, (Poly-)Glykole und Öle pflanzlichen, aber auch mineralischen Ursprungs erwähnt, und als geeignete Emulgatoren werden nur allgemein nichtionogene, aber auch ampholytische, kationische oder anionische Tenside für die beschriebenen Flüssigformulierungen genannt.

Alternativ zu Emulsionskonzentraten auf Lösungsmittelbasis kommen für die oben genannten Wirkstoffe unter anderem Wasser enthaltende Suspensionskonzentrate (SC) bzw. Suspoemulsionen (SE) in Betracht. Derartige Formulierungen sind in WO-A-95/23505, EP-A-0637910 und WO-A-92/09195 beschrieben.

Aus EP1164842 und EP1251736 sind bereits Tensid-Lösungsmittelsysteme bekannt, welche die Herstellung von stabilen flüssigen Formulierungen, wie Emulsionskonzentraten oder Suspensionskonzentraten, für Coformulierungen der Wirkstoffe Desmedipham (DMP) und Phenmedipham (PMP) und Ethofumesate erlauben. Diese Coformulierungen sind für die Kontrolle von Schadpflanzen in Rübenkulturen geeignet.

Je mehr strukturell unterschiedliche Wirkstoffe in einer Formulierung kombiniert werden sollen, umso mehr Einschränkungen in den Formulierungsmöglichkeiten sind zu berücksichtigen. Andererseits bietet eine lagerfähige Fertigmischung im Vergleich zur Tankmischung in der Regel den Vorteil, dass die Wirkstoffe und Formulierungshilfsstoffe in aufeinander abgestimmten Mengenverhältnissen vorliegen, während bei einer Tankmischung die Mengenverhältnisse vom Anwender jeweils eingestellt werden müssen und je nach den verwendeten Formulierungen der Einzelkomponenten Unverträglichkeiten bei den Hilfstoffen auftreten können.

Neben der rein formulierungstechnischen Aufgabe, eine stabile konzentrierte Formulierung bereitzustellen, die bei Verdünnung mit Wasser Spritzbrühen mit physikalisch-anwendungstechnisch günstigen Eigenschaften ergibt, stellt sich vorzugsweise zusätzlich die Aufgabe, Formulierungen mit biologisch günstigen Eigenschaften bereitzustellen. Die für die Formulierungen einzusetzenden Hilfsmittel sollen breit einsetzbar sein und die biologischen Eigenschaften der verwendeten Wirkstoffe unterstützen bzw. möglichst nicht nachteilig beeinflussen. Es ist bekannt, dass die biologische Aktivität mancher pestizider Wirkstoffe in einigen Fällen durch niedermolekulare organische Verbindungen gesteigert werden kann. So eignen sich gemäß BE-A-597284 Ester oder Teilester auf Basis der Orthophosphorsäure und Alkoholen auf Alkyl-, Aryl-, Alkylaryl-, Cycloalkyl- und/oder Heterocyclen-Basis zur Wirkungsverstärkung von Herbiziden, beispielsweise von herbiziden Phenylharnstoffderivaten wie Monuron, Azolen wie Amitrol, Triazinen wie Simazin und Propionsäurederivaten wie Dalapon. Die dabei als Hilfsmittel spezifisch beschriebenen Phosphorsäureester umfassen relativ unpolare oder ganz wasserlösliche Phosphorsäureester, die für die Herstellung von flüssigen Konzentraten nicht besonders geeignet sind. Zudem sind in dieser Schrift die im Rahmen der Aufgabenstellung bevorzugten Rübenherbizide wie Biscarbamate (Phen- und Desmedipham) oder Benzofuranylsulfonate (Ethofumesat) nicht erwähnt.

In DE-A-2914164 sind synergistische Wirkungen beschrieben, die bei Herbiziden mit desikkativer Wirkung an Kulturpflanzen, d. h. beispielsweise Herbiziden aus der Gruppe der Phenylharnstoffe (z. B. Metoxuron, Diuron) oder der Triazine (z. B. Atrazin, Simazin), auftreten, wenn sie mit Lösungsmitteln kombiniert werden, wie sie in der metallurgischen Industrie bei der Metallgewinnung oder als Weichmacher für Polymere eingesetzt werden. Aus der Druckschrift geht nicht hervor, welche der allgemein genannten Lösungsmittel für die Herstellung von flüssigen Konzentraten und daraus herstellbaren flüssigen Zubereitungen geeignet sind.

Es bestand daher die Aufgabe stabile Fertigformulierungen bereitzustellen, welche für die Schadpflanzenkontrolle in Rübenkulturen besonders geeignet sind.

Überraschenderweise wurde nun gefunden, dass bestimmte Tensid-LösungsmittelSysteme in besonderer Weise geeignet sind, für die Coformulierung der Wirkstoffe aus der Gruppe der Biscarbamatherbizide, wie Phenmedipham und/oder Desmedipham, der Benzofuranylsulfonate, wie Ethofumesate, und Lenacil eingesetzt zu werden. Gegenstand der Erfindung sind herbizide Öldispersionen, dadurch gekennzeichnet, dass sie
(a) ein oder mehrere Biscarbamat-Herbizide der Formeln (a1) und (a2), 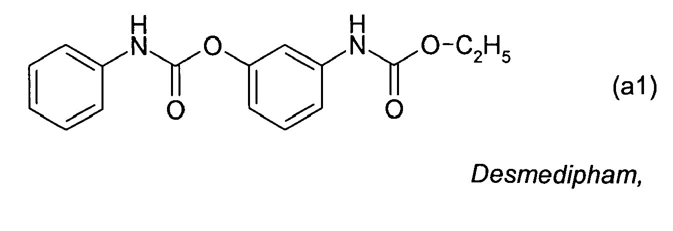 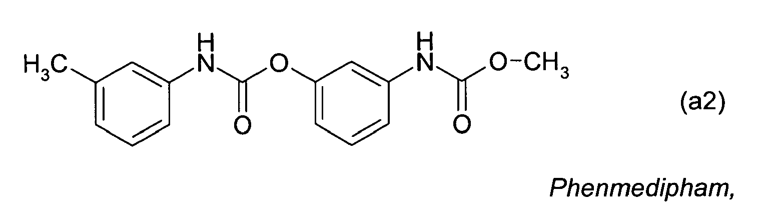 ein oder mehrere Herbizide vom Typ der Benzofuransulfonate, wie Ethofumesate (a3), 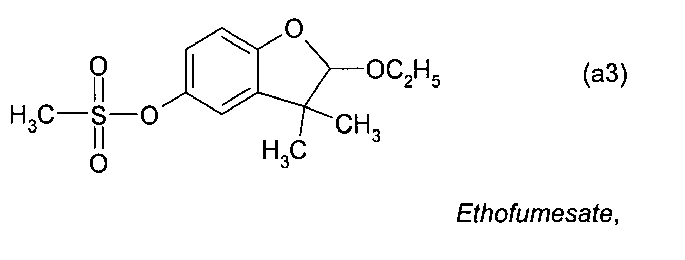 und Lenacil (a4) der Formel 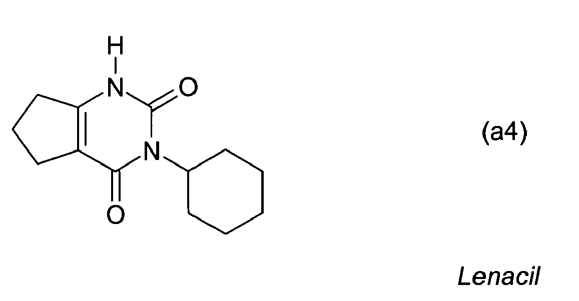
(b) ein oder mehrere Tenside,
(c) ein oder mehrere möglichst polare, zugleich aber wasserunlösliche oder bis 5 g/l in Wasser lösliche, vorzugsweise bis 3 g/l, insbesondere bis 2 g/l in Wasser lösliche Verbindungen aus der Gruppe der vollständig veresterten organische Phosphate und vollständig veresterten Phosphonate als Lösungsmittel,
(d) gegebenenfalls weitere organische Lösungsmittel
(e) gegebenenfalls weitere übliche Formulierungshilfsmittel,
(f) gegebenenfalls Wasser enthalten.

Bei den Verbindungen der Formeln (a1) und (a2) handelt es sich um Derivate der Carbaminsäure. Die herbiziden Eigenschaften dieser Verbindungen sind z. B. in DE-A-3799758 beschrieben. Die Verbindung der Formel (a1) mit dem Namen "Desmedipham" (= Common Name) hat den chemischen Namen 3-(Phenylcarbamoyloxy)-phenylcarbaminsäure-ethylester und die Verbindung der Formel (a2) mit dem Namen "Phenmedipham" (= Common Name) den chemischen Namen 3-(3-Methyl-phenylcarbamoyloxy)-phenylcarbaminsäure-methylester.
Die Verbindung der Formel (a3) mit dem Namen "Ethofumesate" (= Common Name) hat den chemischen Namen Ethansulfonsäure-[(2*RS*)-2,3-dihydro-3,3-dimethylbenzofuran-5-yl]-ester. Ethofumesate enthält ein asymmetrisches C-Atom. Beide Enantiomere von Ethofumesate werden als biologisch aktiv angesehen. Die Formel (a3) umfasst daher alle Stereoisomeren und deren Gemische, insbesondere das Racemat. Ihre herbiziden Eigenschaften sind z.B. in GB-A-1271659 beschrieben.
Die Verbindung der Formel (a4) mit dem Namen "Lenacil" (= Common Name) hat den chemischen Namen 3-Cyclohexyl-1,5,6,7-tetrahydrocyclopentapyrimidine-2,4(3H)-dion. Herbizide Eigenschaften von Lenacil sind beispielsweise in US-A-3235360 beschrieben.
Die Wirkstoffe (a1) bis (a4) sind auch in "The Pesticide Manual", British Crop Protection Council, 14. Ausgabe, 2006 und dort zitierter Literatur beschrieben. Sie sind als Rübenherbizide bekannt.

Erfindungsgemäß einsetzbare Tenside (b) können ein oder mehrere Tenside auf Basis carbocyclischer Aromaten (kurz "auf Aromatenbasis) (b1) oder auf nicht aromatischer Basis (b2) oder ein Gemisch aus Tensiden auf aromatischer und nicht aromatischer Basis (b1) bzw. (b2) enthalten.

Tenside (b1) auf Aromatenbasis sind beispielsweise oberflächenaktive mit einer oder mehreren Alkylgruppen substituierte und nachfolgend derivatisierte Benzole oder Phenole, welche in der Lösungsmittelphase löslich sind und diese-zusammen mit den darin gelösten Wirkstoffen - bei Verdünnung mit Wasser (zur Spritzbrühe) emulgieren. Beispiele für derartige Tenside sind:
(b1.1) Phenole, Phenyl-(C₁-C₄)alkyl-ether oder (poly)alkoxylierte Phenole [= Phenol-(poly)alkylenglykolether], beispielsweise mit 1 bis 50 Alkylenoxyeinheiten im (Poly)alkylenoxyteil, wobei der Alkylenteil vorzugsweise jeweils 1 bis 4 C-Atome aufweist, vorzugsweise mit 3 bis 10 mol Alkylenoxid umgesetztes Phenol,
(b1.2) (Poly)alkylphenole oder (Poly)alkylphenolalkoxylate [= Polyalkylphenol-(poly)alkylenglykolether], beispielsweise mit 1 bis 12 C-Atomen pro Alkylrest und 1 bis 150 Alkylenoxyeinheiten im Polyalkylenoxyteil, vorzugsweise mit 1 bis 50 mol Ethylenoxid umgesetztes Tri-n-butylphenol, Trüsobutylphenol oder Tri-(sec-butyl)phenol,
(b1.3) Polyarylphenole oder Polyarylphenolalkoxylate [= Polyarylphenol-(poly)alkylenglykolether], beispielsweise Tristyrylphenolpolyalkylenglykolether mit 1 bis 150 Alkylenoxyeinheiten im Polyalkylenoxyteil, vorzugsweise mit 1 bis 50 mol Ethylenoxid umgesetztes Tristyrylphenol,
(b1.4) Verbindungen, die formal die Umsetzungsprodukte der unter (b1.1) bis (b1.3) beschriebenen Moleküle mit Schwefelsäure oder Phosphorsäure darstellen und deren mit geeigneten Basen neutralisierte Salze, beispielsweise der saure Phosphorsäureester des dreifach ethoxylierten Phenols, der saure Phosphorsäureester eines mit 9 mol Ethylenoxid umgesetzten Nonylphenols und der mit Triethanolamin neutralisierte Phosphorsäureester des Reaktionsproduktes von 20 mol Ethylenoxid und 1 mol Tristyrylphenol sowie
(b1.5) saure und mit geeigneten Basen neutralisierte (Poly)alkyl- und (Poly)aryl-benzolsulfonate, beispielsweise mit 1 bis 12 C-Atomen pro Alkylrest bzw. mit bis zu 3 Styroleinheiten im Polyarylrest, vorzugsweise (lineare) Dodecylbenzolsulfonsäure und deren öl-lösliche Salze wie beispielsweise das Isopropylammoniumsalz der Dodecylbenzolsulfonsäure.

Bei den genannten Alkylenoxyeinheiten sind 1,2-Ethylenoxy-, 1,2-Propylenoxy-, 1,2-Butylenoxy-, 2,3-Butylenoxy- und 2,2-Dimethyl-1,2-ethylenoxyeinheiten, insbesondere 1,2-Ethylenoxyeinheiten bevorzugt.

Bevorzugte Tenside aus der Gruppe der Tenside auf Aromatenbasis sind insbesondere beispielsweise
mit 4 bis 10 mol Ethylenoxid umgesetztes Phenol, kommerziell beispielsweise in Form der Agrisol^{®}-Marken (Akcros) erhältlich,
mit 4 bis 50 mol Ethylenoxid umgesetztes Trüsobutylphenol oder Tri(sec-butyl)-phenol, kommerziell beispielsweise in Form der Sapogenat T^{®}-Marken (Clariant) erhältlich, z. B. Sapogenat T060 (ethoxyliertes Tri-(sec.-butyl)-phenol mit 6 EO-Einheiten oder Sapogenat T080 (ethoxyliertes Tri-(sec.-butyl)-phenol mit 8 EO-Einheiten,
mit 4 bis 50 mol Ethylenoxid umgesetztes Nonylphenol, kommerziell beispielsweise in Form der Arkopal^{®}-Marken (Clariant) erhältlich,
phosphatiertes Phenolethoxylat (freie Säure), beispielsweise ^{®}Phospholan PHB14 (phosphatiertes Phenolethoxylat mit 4 EO-Einheiten, Akzo),
mit 4 bis 150 mol Ethylenoxid umgesetztes Tristyrylphenol, beispielsweise Soprophor CY/8^{®} (Rhodia) und
saures (lineares) Dodecylbenzolsulfonat, kommerziell beispielsweise in Form der Marlon^{®}-Marken (Hüls) erhältlich.

Tenside (b2) auf nichtaromatischer Basis, welche keine carbocyclischen aromatischen Strukturteile enthalten, sind beispielsweise Tenside auf Aliphaten-, Cycloaliphaten-, Olefin- oder Heterocyclen-Basis, beispielsweise oberflächenaktive Verbindungen mit einer oder mehreren Alkylgruppen, welche in der Lösungsmittelphase löslich sind und geeignet sind, diese - zusammen mit darin gelösten Wirkstoffen - bei Verdünnung mit Wasser (zur Spritzbrühe) emulgieren. Die Verbindungen enthalten keine carbocyclisch aromatischen Ringe, können aber Ringstrukturen enthalten, beispielsweise Cycloalkyl, gesättigte oder partiell ungesättigte Heterocyclylgruppen und gegebenenfalls auch heteroaromatische Gruppen. Als nicht aromatische Tenside sind solche ohne heteroaromatische Gruppen bevorzugt.

Beispiele für derartige Tenside (b) sind nachfolgend aufgeführt, worin EO = 1,2-Ethylenoxideinheiten, PO = 1,2-Propylenoxideinheiten und BO = Butylenoxideinheiten, vorzugsweise EO, PO und BO = 2,3-Butylenoxy- oder 2,2-Dimethyl-1,2-ethylenoxyeinheiten bedeutet:
(b2.1) Fettalkohole mit 10 - 24 Kohlenstoffatomen mit 0-60 EO und/oder 0-20 PO und/oder 0-15 BO in beliebiger Reihenfolge. Die terminalen Hydroxygruppen dieser Verbindungen können durch einen Alkyl-, Cycloalkyl- oder Acylrest mit 1-24 Kohlenstoffatomen endgruppenverschlossen sein. Beispiele für derartige Verbindungen sind:
   Genapol®C-,L-,O-,T-,UD-,UDD-,X-Marken von Clariant, Plurafac®- und
   Lutensol®A-,AT-,ON-,TO-Marken von BASF, Marlipal®24- und
   Marlipal®O13-Marken von Condea, Dehypon®-Marken von Henkel,
   Ethylan®-Marken von Akzo-Nobel wie Ethylan CD 120.
(b2.2) Anionische Derivate der unter (b2.1) beschriebenen Produkte in Form von Ethercarboxylaten, Sulfonaten, Sulfaten und Phosphaten und deren anorganischen (z.B Alkali und Erdalkali) und organischen Salzen (z.B. auf Amin- oder Alkanolaminbasis) wie Genapol®LRO, Sandopan®-Marken, Hostaphat/Hordaphos®-Marken von Clariant, Servoxyl-Marken von Elementis.
   Copolymere bestehend aus EO-, PO- und/oder BO-Einheiten wie zum Beispiel Blockcopolymere wie die Pluronic®-Marken von der BASF und die Synperonic®-Marken von Uniquema mit einem Molekulargewicht von 400 bis 10⁸.
   Alkylenoxydaddukte von C₁ - C₉ Alkoholen wie Atlox®5000 von Uniquema oder Hoe®-S3510 von Clariant.
   Anionische Derivate der unter b2.3) und b2.4) beschriebenen Produkte in Form von Ethercarboxylaten, Sulfonaten, Sulfaten und Phosphaten und deren anorganischen (z.B Alkali und Erdalkali) und organischen Salzen (z.B. auf Amin- oder Alkanolaminbasis).
(b2.3) Fettsäure- und Triglyceridalkoxylate wie die Serdox®NOG-Marken von Condea, die Emulsogen®-Marken von Clariant oder die Alkamuls®-OR-Marken von Rhodia, Salze von aliphatischen, cycloaliphatischen und olefinischen Carbonsäuren und Polycarbonsäuren, sowie alpha-Sulfofettsäureester wie von Henkel erhältlich.
(b2.4) Fettsäureamidalkoxylate wie die Comperlan®-Marken von Henkel oder die Amam®-Marken von Rhodia. Alkylenoxydaddukte von Alkindiolen wie die Surfynol®-Marken von Air Products. Zuckerderivate wie Amino- und Amidozucker von Clariant, Glukitole von Clariant, Alkylpolyglycoside in Form der APG®-Marken von Henkel oder wie Sorbitanester in Form der Span®- oder Tween®--Marken von Uniquema oder Cyclodextrinester oder -ether von Wacker.
(b2.5) Oberflächenaktive Cellulose- und Algin-, Pektin- und Guarderivate wie die Tylose®-Marken von Clariant, die Manutex®-Marken von Kelco und Guarderivate von Cesalpina. Alkylenoxydaddukte auf Polyolbasis wie Polyglykol®-Marken von Clariant. Grenzflächenaktive Polyglyceride und deren Derivate von Clariant.
(b2.6) Sulfosuccinate, Alkansulfonate, Paraffin- und Olefinsulfonate wie Netzer IS®, Hoe®S1728, Hostapur®OS, Hostapur®SAS von Clariant, Triton®GR7ME und GR5 von Union Carbide, Empimin®-Marken von Albright und Wilson, Marlon®-PS65 von Condea.
(b2.7) Sulfosuccinamate wie die Aerosol®-Marken von Cytec oder die Empimin®-Marken von Albright und Wilson.
(b2.8) Alkylenoxidaddukte von Fettaminen, quartäre AmmoniumVerbindungen mit 8 bis 22 Kohlenstoffatomen (C₈-C₂₂) wie z.B. die Genamin®C,L,O,T-Marken von Clariant.
(b2.9) Oberflächenaktive, zwitterionische Verbindungen wie Tauride, Betaine und Sulfobetaine in Form von Tegotain®-Marken von Goldschmidt, Hostapon®T- und Arkopon®-Marken von Clariant.
(b2.10) Oberflächenaktive Verbindungen auf Silikon- bzw. Silanbasis wie die Tegopren^{®}-Marken von Goldschmidt und die SE^{®}-Marken von Wacker, sowie die Bevaloid^{®}-, Rhodorsil^{®}- und Silcolapse^{®}-Marken von Rhodia (Dow Corning, Reliance, GE, Bayer).
(b2.11) Per- oder polyfluorierte oberflächenaktive Verbindungen wie Fluowet^{®}-Marken von Clariant, die Bayowet^{®}-Marken von Bayer, die Zonyl^{®}-Marken von DuPont und Produkte dieser Art von Daikin und Asahi Glass.
(b2.12) Grenzflächenaktive Sulfonamide z.B. von Bayer.
(b2.13) Grenzflächenaktive Polyacryl- und Polymethacrylderivate wie die Sokalan^{®}-Marken von der BASF.
(b2.14) Oberflächenaktive Polyamide wie modifizierte Gelatine oder
derivatisierte Polyasparginsäure von Bayer und deren Derivate. (b2.15) Tensidische Polyvinylverbindungen wie modifiziertes PVP wie die Luviskol^{®}-Marken von BASF und die Agrimer^{®}-Marken von ISP oder die derivatisierten Polyvinylacetate wie die Mowilith^{®}-Marken von Clariant oder die -butyrate wie die Lutonal^{®}-Marken von der BASF, die Vinnapas^{®}- und die Pioloform^{®}-Marken von Wacker oder modifizierten Polyvinylalkohole wie die Mowiol^{®}-Marken von Clariant.
(b2.16) Oberflächenaktive Polymere auf Basis von Maleinsäureanhydrid und/oder Umsetzungsprodukten von Maleinsäureanhydrid, sowie Maleinsäureanhydrid und/oder Umsetzungsprodukte von Maleinsäureanhydrid beinhaltende Copolymere wie die Agrimer^{®}-VEMA-Marken von ISP.
(b2.17) Oberfächenaktive Derivate von Montan-, Polyethylen-, und Polypropylenwachsen wie die Hoechst®wachse oder die Licowet^{®}-Marken von Clariant.
(b2.18) Oberflächenaktive Phosphonate und Phosphinate wie Fluowet^{®}-PL von Clariant.
(b2.19) Poly- oder perhalogenierte Tenside wie beispielsweise Emulsogen^{®}-1557 von Clariant.
   Vorzugsweise enthalten die Öldispersionen ein oder mehrere Tenside (b1) auf aromatischer Basis.

Die erfindungsgemäßen Öldispersionen können auch Gemische der Tenside (b1) und (b2) enthalten. So ist es oft vorteilhaft neben nichtionogenen Tensiden (b1) und/oder (b2) ionogene Tenside, beispielsweise anionaktive oder kationaktive Tenside (b1) bzw. (b2) zu verwenden.

Bevorzugt sind beispielsweise Kombinationen von aromatischen Tensiden (b1) mit anionaktiven Tensiden (b2) wie beispielsweise anionaktive Tenside aus der Gruppe der Alkylpolyglykolethercarboxylate wie Akypo RLM 45® (Kao) bzw. Marlowet 4538® (Condea).

Bevorzugt sind beispielsweise auch Kombinationen von aromatischen Tensiden (b1) mit nichtionogenen und/oder anionischen Tensiden (b2) wie beispielsweise nichtionogene Tenside aus der Gruppe ethoxylierten Fette oder Fettsäuren, beispielsweise Emulsogen EL 400® (Ricinusölethoxylat mit 40 EO, Clariant), Etocas 12® (Ricinusölethoxylat mit 12 EO, Croda), Alkamuls OR/40 (Ricinusölethoxylat mit HLB 14, Rhodia), Serdox NOG 600® (Ölsäure-ethoxylat mit 14-15 EO, Servo), oder auch nichtionogene tensidische Polymere auf Alkylenoxidbasis, wie beispielsweise Ethylenoxid/Propylenoxid-Blockcopolymere (z.B. Genapol PF40® (Clariant)), oder anionische Tenside wie beispielsweise Servoxyl VPDZ 20/100 (phosphatierter ethoxylierter Isotridecylalcohol mit 20 EO-Einheiten, Elementis).

Organische Phosphate bzw. Phosphonate [Komponente (b3), Lösungsmittel] im Sinne der Erfindung sind vollständig umgesetzte, nicht verseifte Ester der ortho-Phosphorsäure bzw. einer Alkyl-, Aryl-, Alkylaryl-, Poly(alkyl)-aryl- oder Poly(arylalkyl)-aryl-Phosphonsäure. Bevorzugt eignen sich dabei (möglichst) polare, zugleich aber weitgehend wasserunlösliche Verbindungen, die aufgrund ihrer Grenzflächenaktivität die Grenzflächenspannung der den Wirkstoff (a) oder die Wirkstoffe (a) enthaltenden Öltröpfchen in der Spritzbrühe gegenüber der äußeren wässrigen Phase so herabsetzen, dass sich im Verbund mit den in der Formulierung zusätzlich enthaltenen Tensiden/Emulgatoren eine applikationstechnisch einwandfreie stabile Verdünnung/Spritzbrühe ergibt. Besonders bevorzugt eignen sich Verbindungen der obengenannten Art, die vor oder nach der Veresterung mit der ortho-Phosphorsäure bzw. Phosphonsäure alkoxyliert wurden, insbesondere Tri(butoxyethyl)phosphat (TBEP), das bei 20 °C eine Wasserlöslichkeit von 1,1 g/l besitzt.

Die Verbindungen der Komponente (b2) haben das gemeinsame Merkmal, dass sie in wässriger Lösung keine - z.B. mit Lichtstreumessungen oder anderen Verfahren nachweisbaren - mizellaren Aggregate ausbilden. Dies grenzt sie von den Phosphorsäureestertensiden ab und rechtfertigt ihre Einstufung als Lösungsmittel.

Geeignete polare und zugleich weitgehend wasserunlösliche organische Phosphorsäureester [Komponente (c)] sind die formal dreifach mit Alkoholen umgesetzten Ester der Orthophosphorsäure und die Oxalkylate der formal ein-und/oder zweifach mit Alkoholen umgesetzten Orthophophorsäure. Als Komponente
(c) eignen sich dabei beispielsweise:
   (c1) weitgehend wasserunlösliche polare Ester der Phosphorsäure aus der Gruppe enthaltend
      (c1.1) Phoshorsäuretriester mit einwertigen Alkanolen mit 5 bis 22 C-Atomen,z.B. mit n-, i- oder neo-Pentanol, n-Hexanol, n-Octanol, 2-Ethylhexanol,
      (c1.2) Phoshorsäuretriester mit Diolen oder Polyolen, wie Ethylenglykol, Propylenglykol oder Glycerin,
      (c1.3) Phoshorsäuretriester mit Aryl-, Alkylaryl-, Poly(alkyl)aryl- und Poly(arylalkyl)arylalkoholen, beispielsweise mit Phenol, Kresol, Octylphenol, Nonylphenol, Trüsobutylphenol, Tri-n-butylphenol, Tri-(sec-butyl)-phenol und/oder Tristyrylphenol,
      (c1.4) Phoshorsäuretriester mit alkoxylierten Alkoholen, die durch Umsetzung der vorstehend unter (c1.1) bis (c1.3) genannten Alkoholkomponenten mit Alkylenoxiden, vorzugsweise (C₂-C₄)Alkylenoxiden erhalten werden, und
      (c1.5) Phoshorsäuretriester mit alkoxylierten Alkoholen, die durch Umsetzung einwertiger Alkanole mit 1 bis 4 C-Atomen und Alkylenoxiden, vorzugsweise (C₂-C₄)Alkylenoxiden erhalten werden, oder
      (c1.6) Phoshorsäuretriester mit einem Gemisch aus Alkoholen aus zwei oder mehreren der vorstehend unter den Gruppen (c1.1) bis (c1.5) genannten Alkoholkomponenten,
         wobei die 3 Alkoholkomponenten des Phosphorsäureesters aus den Gruppen (c1.1) bis (c1.5) jeweils gleiche oder verschiedene sein können und so ausgewählt sind, dass der Ester als weitgehend wasserunlösliches polares Lösungsmittel einsetzbar ist.
      Weiterhin als Komponente (c) geeignet sind:
   (c2) weitgehend wasserunlösliche und zugleich polare Phosphonate auf Basis von zweifach mit Alkoholen und/oder alkoxylierten Alkoholen veresterten Alkyl-, Aryl-, Alkylaryl-, Poly(alkyl)-aryl- oder Poly(arylalkyl)-aryl-Phosphonsäuren, vorzugsweise
      (c2.1) Diester von Phosphonsäuren mit einwertigen Alkanolen mit 1 bis 22 C-Atomen, z.B. mit z. B. n-Methanol, n-Ethanol, n- oder i-Propanol, n-, i-oder t-Butanol, n-, i- oder neo-Pentanol, n-Hexanol, n-Octanol, 2-Ethylhexanol, oder auch sec-Butanol,
      (c2.2) Diester von Phosphonsäuren mit Diolen oder Polyolen, wie Ethylenglykol, Propylenglykol oder Glycerin,
      (c2.3) Diester von Phosphonsäuren mit Aryl-, Alkylaryl-, Poly(alkyl)aryl- oder Poly(arylalkyl)arylalkoholen, beispielsweise mit Phenol, Kresol, Octylphenol, Nonylphenol, Triisobutylphenol und/oder Tristyrylphenol,
      (c2.4) Diester von Phosphonsäuren mit alkoxylierten Alkoholen, die durch Umsetzung der vorstehend unter (c2.1) bis (c2.3) genannten Alkohole mit Alkylenoxiden, vorzugsweise (C₂-C₄)Alkylenoxiden, erhalten werden, oder
      (c2.5) Diester von Phosphonsäuren mit einem Gemisch aus Alkoholen aus zwei oder mehreren der vorstehend unter den Gruppen (c2.1) bis (c2.4) genannten Alkoholkomponenten,
         wobei die 2 Alkoholkomponenten des Phosphonsäurediesters aus den Gruppen (c2.1) bis (c2.4) jeweils gleiche oder verschiedene sein können und so ausgewählt sind, dass der Ester als weitgehend wasserunlösliches polares Lösungsmittel einsetzbar ist.
         Bei den Alkylenoxyeinheiten sind (C₂-C₄)Alkylenoxideinheiten bevorzugt, z. B. 1,2-Ethylenoxy-, 1,2-Propylenoxy- und/oder Butylenoxyeinheiten (1,2-Butylenoxy-, 2,3-Butylenoxy- und 2,2-Dimethyl-1,2-ethylenoxyeinheiten) insbesondere 1,2-Propylenoxy- und/oder 1,2-Ethylenoxyeinheiten.
         Die Alkoholkomponenten enthalten vorzugsweise 1-200, insbesondere 1-150, ganz besonders 1-100 Alkylenoxyeinheiten, vorzugsweise 1,2-Ethylenoxyeinheiten.
         Bevorzugte Phosporsäureester (c1) (Ester der Orthophosphorsäure) sind insbesondere beispielsweise
      (c1.7) Phosporsäuretriester mit alkoxylierten kurzkettigen Alkoholen mit 1 bis 22 C-Atomen im Alkylrest und 1 bis 30 Alkylenenoxyeinheiten im Polyalkylenoxyteil, beispielsweise Tributoxyethylphosphat (Clariant), genauer bzw. vorzugsweise Tri-[2-(n-butoxy)-ethyl]-phosphat,
      (c1.8) Phosporsäuretriester mit Alkylalkoholen mit 5 bis 22 C-Atomen, beispielsweise Hostaphat CG 120® (Clariant), Tri-n-Octylphosphat ("TOF", Bayer), sowie
      (c1.9) Phosporsäuretriester auf Basis von teilweise mit gegebenenfalls alkoxylierten Alkoholen mit 1 bis 22 C-Atomen im Alkylrest oder gegebenenfalls alkoxylierten Phenolderivaten, jeweils mit 0 bis 30 Alkylenoxyeinheiten im Polyalkylenoxy-teil teilweise veresterter ortho-Phosphorsäure, wobei die verbleibenden OH-Valenzen der ortho-Phosphorsäure nachfolgend alkoxyliert wurden (z.B. mit 1 bis 10 mol Alkylenoxid mit 2 bis 4 C-Atomen), beispielsweise das Reaktionsprodukt von Mono-/Dibutoxyethylphosphat und 2 mol Ethylenoxid bzw. 2 mol Propylenoxid (Clariant).
         Bevorzugte Phosphonate (c2) (vollständig veresterte Phosphonsäuren) sind insbesondere beispielsweise
      (c2.6) formal zweifach mit Alkoholen umgesetzte Ester der n-Octylphosphonsäure, beispielsweise die Hostarex-Typen® (Clariant).

Daneben können die erfindungsgemäßen Formulierungen weitere Lösungsmittel enthalten, ohne dass die vorteilhaften Eigenschaften des Tensid-LösungsmittelSystems verlorengehen. Im Zusammenhang mit der vorliegenden Erfindung eignen sich als zusätzliche Lösungsmittel beispielsweise unpolare Lösungsmittel, polare protische oder aprotisch dipolare Lösungsmittel und deren Mischungen. Beispiele für Lösungsmittel im Sinne der Erfindung sind
- aliphatische oder aromatische Kohlenwasserstoffe, wie z.B. Mineralöle, Paraffine oder Toluol, Xylole und Naphthalinderivate, insbesondere 1-Methylnaphthalin, 2-Methylnaphthalin, 6-16C-Aromatengemische wie z.B. die Solvesso^{®}-Reihe (ESSO) mit den Typen Solvesso^{®} 100 (Kp. 162-177 °C), Solvesso^{®} 150 (Kp. 187-207 °C) und Solvesso^{®} 200 (Kp. 219-282 °C) und 6-20C-Aliphaten, die linear oder cyclisch sein können, wie die Produkte der Shellsol^{®}-Reihe, Typen T und K oder BP-n Paraffine,
- halogenierte aliphatische oder aromatische Kohlenwasserstoffe wie Methylenchlorid bzw. Chlorbenzol,
- Ester wie z.B. Triacetin (Essigsäuretriglycerid), Butyrolacton, Propylencarbonat, Triethylzitrat und Phthalsäure-(C₁-C₂₂)alkylester, speziell Phthalsäure(C₄-C₈)alkylester,
- Ether wie Diethylether, Tetrahydrofuran (THF), Dioxan, Alkylenglykolmonoalkyether und -dialkylether wie z.B. Propylenglykolmonomethylether, speziell Dowanol^{®} PM (Propylenglykolmonomethylether), Propylen-glykolmonoethylether, Ethylenglykolmonomethylether oder - monoethylether, Diglyme und Tetraglyme,
- Amide wie Dimethylformamid (DMF), Dimethylacetamid, Dimethylcapryl/caprin-fettsäureamid und N-Alkylpyrrolidone,
- Ketone wie das wasserlösliche Aceton, aber auch mit Wasser nicht mischbare Ketone wie beispielsweise Cyclohexanon oder Isophoron,
- Nitrile wie Acetonitril, Propionitril, Butyronitril und Benzonitril,
- Sulfoxide und Sulfone wie Dimethylsulfoxid (DMSO) und Sulfolan sowie
- Öle im Allgemeinen, z.B. auf pflanzlicher Basis wie Maiskeimöl und Rapsöl.

Häufig eignen sich auch Kombinationen verschiedener Lösungsmittel, die zusätzlich Alkohole wie Methanol, Ethanol, n- und i-Propanol, n-, i-, t- und 2-Butanol enthalten.

Bevorzugte zusätzliche organische Lösungsmittel im Sinne der vorliegenden Erfindung sind insbesondere Amide wie Dimethylcapryl-/caprinfettsäureamid und N-Methylpyrrolidon.

Mit den erfindungsgemäßen Tensid-/Lösungsmittelsystemen aus den eingesetzten Komponenten (b) und (c) lassen sich nun überraschenderweise stabile Öldispersionen von Biscarbamat-(Desmedipham und/oder Phenmedipham), Sulfonat-Herbiziden (Ethofumesat) und Uracilherbiden (Lenacil) herstellen. Darüberhinaus beeinflußt das erfindungsgemäße Tensidsystem die pestizide Wirkung der eingearbeiteten Wirkstoffe in günstiger Weise.

Das erfindungsgemäße Tensid-/Lösungsmittelsystem (b) und (c) gestattet auch die Herstellung von Emulsionskonzentraten mit anderen als den hier aufgeführten Wirkstoffen, sofern sie hinsichtlich ihrer Löslichkeiten ähnliche Eigenschaften aufweisen. Beispielsweise eignen sich auch Herbizide aus der Gruppe der Phenoxyphenoxypropionate wie Diclofop-methyl, Cyhalofop-butynyl, der Heteroaryloxyphenoxypropionate wie Fenoxaprop-ethyl, Fenoxaprop-P-ethyl, Fluazifop-butyl, Fluazifop-P-butyl, Haloxyfop-methyl, Haloxyfop-etotyl, Haloxyfop-P-methyl, Propquizofop, Quizalofop-ethyl, Quizalofop-P-ethyl oder Clodinafoppropargyl, aus der Gruppe der Triazinone wie Metamitron, Metribuzin oder Hexazinon, aus der Gruppe der Sulfonylharnstoffe wie Triflusulfuron-methyl, Amidosulfuron, lodosulfuron-methyl, Tribenuron-methyl, Triasulfuron, Thifensulfuronmethyl, Sulfosulfuron, Sulfometuron-methyl, Prosulfuron, Primisulfuron-methyl, Oxasulfuron, Metsulfuron-methyl, Ethoxysulfuron, Ethametsulfuron-methyl, Cyclosulfamuron, Cinosulfuron, Chlorsulfuron, Chlorimuron-ethyl oder Bensulfuronmethyl, vorzugsweise in Form der Nicht-Salze, aber auch wenig wasserlösliche Pyridylsulfonylharnstoffe, oder andere Herbizide wie Benfuresate, oder andere Wirkstoffe wie das Fungizid Prochloraz und/oder Insektizide wie Deltamethrin. Dies zeigt die Flexibilität des beschriebenen Tensid/Lösungsmittel-Systems auf. Die genannten Verbindungen sind aus "The Pesticide Manual", British Crop Protection Council, 14. Ausgabe, 2006 dem Fachmann bekannt.

Die erfindungsgemäßen Öldispersionen ergeben bei Verdünnung mit Wasser Dispersionen von Ölphasen in Wasser bzw. - bei entsprechender Auswahl der Einzelkomponenten - von wässrigen Phasen in Öl. Je nach Zusammensetzung sind damit folglich entweder mit Wasser oder mit Öl unter Erhalt der kolloidalen Struktur verdünnbare Dispersionen zugänglich. Daher sind die via Verdünnung aus den beschriebenen Konzentraten zugänglichen Dispersionen ein weiterer Gegenstand der Erfindung.

Die Gewichtsverhältnisse der kombinierten herbiziden Wirkstoffe vom Typ (a), d. h. Carbamatherbizide (a1) und/oder (a2):Ethofumesate (a3):Lenacil (a4) können innerhalb weiter Grenzen variieren, sind jedoch in der Regel im Bereich von (1):(0,1):(0,01) bis (1):(5):(3), vorzugsweise im Bereich von (1):(0,2):(0,05) bis (1):(2):(2), insbesondere im Bereich von (1):(0,5):(0,1) bis (1):(1,5):(1).
Die Gewichtsverhältnisse der kombinierten herbiziden Wirkstoffe in der Viererkombination vom Typ (a1):(a2):(a3):(a4) liegen in der Regel im Bereich von (1):(0,5):(0,2):(0,02) bis (1):(10):(20):(10), vorzugsweise im Bereich von (1):(1):(0,5):(0,05) bis (1):(6):(10):(5), insbesondere im Bereich von (1):(1):(1):(0,3) bis (1):(5):(8):(4).

Die Aufwandmengen der Herbizidkomponenten können in einem weiten Bereich variieren und liegen allgemein im Bereich von 100 und 5000 g Aktivsubstanz per Hektar (= AS/ha), vorzugsweise zwischen 150 und 3500 g AS/ha, insbesondere 200 und 2500 g AS/ha, ganz besonders 300 und 1200 g AS/ha für die Gesamtmenge an Herbiziden (a1) bis (a4). Dabei ist die Aufwandmenge der einzelnen Herbizide in der Regel im Bereich von: 10 bis 500 g AS/ha, vorzugsweise 10 bis 200 g AS/ha, insbesondere 20 bis 150 g AS/ha Desmedipham (a1),
15 bis 1000 g AS/ha, vorzugsweise 15 bis 500 g AS/ha, insbesondere 20 bis 200 g AS/ha Phenmedipham (a2),
15 bis 1000 g AS/ha, vorzugsweise 20 bis 500 g AS/ha, insbesondere 20 bis 250 g AS/ha Ethofumesate (a3),
5 bis 500 g AS/ha, vorzugsweise 10 bis 300 g AS/ha, insbesondere 15 bis 150 g AS/ha Lenacil (a4):

Bei gleicher Herbizidwirkung liegt die Aufwandmenge bei der kombinierten Anwendung aller vier Herbizide (a1)-(a4) wesentlich unterhalb der Aufwandmengen für die Applikation von Kombinationen oder Einzelapplikationen der Biscarbamat-Herbizide vom Typ (a1) und (a2).

Daher sind stabile Formulierungen, in denen alle vier Wirkstoffe enthalten sind, aufgrund ihrer hohen biologischen Wirksamkeit - bei insgesamt reduziertem Wirkstoffgehalt - von besonderem Interesse. Allerdings ist die optimale Wahl der Gewichtsverhältnisse und der Aufwandmengen abhängig vom Entwicklungsstadium der jeweiligen Unkräuter oder Ungräser, der vorherrschenden Unkrautspektren, Umweltfaktoren und Klimabedingungen, so dass die oben angegebenen Gewichtsverhältnisse und Aufwandmengen im Einzelfall zu überprüfen sind.

Die zur Herstellung der genannten Formulierungen notwendigen Hilfsmittel wie insbesondere Tenside und Lösungsmittel sind im Prinzip bekannt und werden beispielsweise beschrieben in: McCutcheon's "Detergents and Emulsifiers Annual", MC Publ. Corp., Ridgewood N.J.; Sisley and Wood, "Encyclopedia of Surface active Agents", Chem. Publ.Co.Inc., N.Y. 1964; Schönfeldt, "Grenzflächenaktive Äthylenoxidaddukte", Wiss. Verlagsgeselischaft, Stuttgart 1976; Winnacker-Küchler, "Chemische Technologie", Band 7, C.Hanser-Verlag, München, 4.Auflage 1986.

Während der chemische "Aufbau" der einzelnen einsetzbaren Komponenten dort hinreichend beschrieben ist, sind Vorhersagen bezüglich der Eigenschaften von Mischungen derartiger Komponenten für die Formulierung eines bestimmten Wirkstoffsystems aus den genannten Handbüchern in der Regel nicht ableitbar. Verwendet man z.B. eine Tensid/Lösungsmittelkombination, mit der sich für Wirkstoffkombinationen aus Desmedipham, Phenmedipham, Ethofumesat und Lenacil bei relativ niedriger "Wirkstoffbeladung" stabile Öldispersionen ergeben, so erhält man trotz Anwesenheit von Tensiden bei Erhöhung der Wirkstoffkonzentration keine stabilen Konzentrate mehr, sondern instabile mehrphasige Systeme, die auch zu starkem Auskristallisieren der Wirkstoffe neigen. Daraus ergibt sich unmittelbar die Bedeutung der erfindungsgemäßen Komponente (c) (ortho-Phosphorsäureester und/oder Phosphonsäureester) als Lösungsmittel für die Stabilität der herzustellenden Öldispersionen.
In der Regel enthalten die erfindungsgemäßen Öldispersionen die Wirkstoffe (a1) bis (a3) in gelöster Form, während der Wirkstoff (a4) in suspendierter Form vorliegt.
Das verwendete Lösungsmittel (c), beispielsweise Tributoxyethylphosphat (TBEP), gestattet also eine höhere Beladung der Formulierung mit den weitgehend wasserunlöslichen Wirkstoffen (a1) bis (a3) und übertrifft damit andere, strukturell ähnliche Lösungsmittel wie Tributylphosphat (TBP) bezüglich der "Lösekraft". Unabhängig davon können im Einzelfall jedoch noch weitere Lösungsmittel erforderlich sein, um eine stabile Öldispersion zu erhalten, die ein Auskristallisieren der enthaltenen Wirkstoffe weitgehend verhindert.

Der Wirkstoff (a4) liegt in den beschriebenen Öldispersionen in weitgehend ungelöster, also suspendierter Form vor. Derartige Dispersionen eines Feststoffes in organischen, tensidhaltigen Lösemitteln neigen häufig, bei Lagerung, zur Bildung fester, nicht mehr aufschüttelbarer Bodensätze. Auch ein Größenwachstum der dispergierten Kristalle stellt ein immer wiederkehrendes Problem in der Praxis dar; als Folge hiervon kann es nach der Herstellung einer Spritzbrühe und anschließender Spritzapplikation zu Verstopfungen von Düsen kommen.
Es war daher nicht ohne weiteres zu erwarten, dass sich der Wirkstoff (a4) ohne derartige Komplikationen in die Lösung der Wirkstoffe (a1) bis (a3) integrieren ließ. Trotzdem wurde gefunden, dass sich in einem Produkt mit der in Beispiel 2 angegebenen Zusammensetzung nach einem Jahr Standzeit keinerlei Bodensatz gebildet hatte. Auch die direkt nach der Herstellung für (a4) gemessene mittlere Kristallgröße von beispielsweise ca. 4 µm hatte sich während dieser Zeit nicht geändert.

Vorzugsweise eignen sich Kombinationen aus einem ortho-Phosphorsäure-und/oder einem Phosphonsäureester als Lösungsmittel und einem oder mehreren Tensiden, welche ein Tensid auf Aromatenbasis, vorzugsweise ein nichtionogenes

Tensid auf Aromatenbasis enthalten, besonders gut zur Herstellung stabiler Öldispersionen.

Ein für die Auswahl weiterer Tensidkomponenten kritischer Faktor ist deren "Acidität bzw. Basizität pro Gewichts- bzw. Volumeneinheit", die durch die Säure- bzw. Aminzahl ausgedrückt wird. Ein zu starker Anstieg der Gesamt-Säure- bzw. Aminzahl in der Fertigformulierung ist insofern problematisch als er eine Ausflockung/Kristallisation des/der formulierten Wirkstoffe nach sich ziehen kann. Daher ist bei der Auswahl weiterer Tensidkomponenten darauf zu achten, dass die Gesamt-Säure- bzw. Aminzahl nicht zu stark ansteigt. Vorzugsweise eignen sich folglich neben nichtionogenen Tensiden nur saure bzw. basische Komponenten mit hinreichend kleiner Säure- bzw. Aminzahl. Da letztere wiederum mit dem Molekulargewicht korreliert, kommen als weitere Tensidkomponeten vielfach auch saure bzw. basische Derivate von Verbindungen mit hohem Molekulargewicht wie beispielsweise Tristyrylphenolalkoxylate in Frage. Im Falle nichtionogener Tenside sind diese Überlegungen - entsprechend dem nichtionogenen Charakter dieser Komponenten - hinfällig.

In diesem Zusammenhang ist weiterhin darauf hinzuweisen, dass die beschriebenen Tensid/Lösungsmittel-Systeme die Herstellung stabiler Öldispersionen mit in weiten Grenzen variabler Wirkstoffbeladung und -zusammensetzung ermöglichen: So kann die Wirkstoffbeladung beispielsweise zwischen 20 und 40, vorzugsweise zwischen 24 und 30 Gewichtsprozent variieren. Bevorzugte Gewichtsverhältnisse der Komponenten Ortho-Phosphorsäure-ester/Phosphonsäureester:Tensid auf Aromatenbasis sind je nach Wirkstoffbeladung und -zusammensetzung der Emulsionskonzentrate 100:1 bis 1:100, besonders bevorzugt 20:1 bis 1:20, weiter bevorzugt 5:1 bis 1:5.

Konzentrierte Öldispersionen, die entsprechend der vorliegenden Erfindung hergestellt werden, enthalten a priori kein zusätzliches Wasser, sondern nur das in den genannten kommerziell erhältlichen Tensiden bzw. Tensidmischungen, Polymeren und Lösungsmitteln vorhandene Restwasser. Aufgrund der in den Formulierungen enthaltenen Tenside ist es jedoch möglich, die genannten

Formulierungen bis hin zu einem kritischen Volumenbruch mit Wasser zu verdünnen, ohne dass es zu einer Eintrübung bzw. Instabilisierung der Formulierung kommt. Dabei entstehen formal zunächst W/O-Mikroemulsionen, die bei weiterer Erhöhung des Wasseranteiles in W/O-Emulsionen und schließlich - bei weiterer Verdünnung mit Wasser - in O/W-Emulsionen übergehen. Die Erfindung umfasst daher auch neben der erfindungsgemäßen Tensid-/Lösungsmittelmischung (b) + (c) (zusätzliches) Wasser enthaltende flüssige Formulierungen der Wirkstoffen vom Typ (a1), (a2), (a3) und (a4).

Mit Hilfe der Komponentenmischungen (b) + (c) lassen sich vorzugsweise konzentrierte flüssige Öldispersionen herstellen, gekennzeichnet durch einen Gehalt an
(a) 1 bis 50 Gew.-%, vorzugsweise 10 bis 40 Gew.-% Wirkstoffe (a1) bis (a4),
(b) 3 bis 70 Gew.-%, vorzugsweise 5 bis 60 Gew.-% Tenside,
(c) 5 bis 70 Gew.-%, vorzugsweise 10 bis 50 Gew.-% Phosphorsäureester oder Phosphonsäureester (c1) und/oder (c2),
(d) 0 bis 40 Gew.-%, vorzugsweise 0 bis 20 Gew.-% weitere Lösungsmittel
(e) 0 bis 20 Gew.-%, vorzugsweise 0 bis 10 Gew.-% weitere übliche Formulierungshilfsmittel,
(f) 0 bis 20 Gew.-%, vorzugsweise 0 bis 10 Gew.-% Wasser.

Weitgehend wasserfreie konzentrierte Öldispersionen stellen eine günstige Anwendungsform der herbiziden Wirkstoffe vom Typ (a) dar und sind ein bevorzugter Gegenstand der Erfindung. Besonders bevorzugt sind Öldispersionen, welche
(a) 10 bis 40 Gew.-%, vorzugsweise 15 bis 30 Gew.-% Wirkstoffe (a1) bis (a4),
(b) 5 bis 70 Gew.-%, vorzugsweise 15 bis 60 Gew.-% Tenside,
(c) 10 bis 70 Gew.-%, vorzugsweise 15 bis 50 Gew.-% Phosphorsäureester oder Phosphonsäureester (c1) und/oder (c2),
(d) 0 bis 40 Gew.-%, vorzugsweise 0 bis 20 Gew.-% weitere Lösungsmittel und
(e) 0 bis 20 Gew.-%, vorzugsweise 0 bis 10 Gew.-% weitere übliche Formulierungshilfsmittel
   enthalten.

Übliche Formulierungshilfsmittel e) sind beispielsweise Mittel, welche die Thixotropie und Rheologie der Öldispersionen beeinflussen, z. B. Verdicker, Frostschutzmittel, Verdunstungshemmer, Konservierungsmittel, Riechstoffe, Farbstoffe, Entschäumer Füll-, Träger- und Farbstoffe, den pH-Wert (Puffer, Säuren und Basen) beeinflussende Mittel und weitere.

Bevorzugte Formulierungshilfsmittel e) sind
◆ Verdicker, z.B. in einer Menge von 0,001 bis 5 Gew.-%
◆ Frostschutzmittel und Verdunstungshemmer wie Glycerin, z.B. in einer Menge von 2 bis 10 Gew.-% und
◆ Konservierungsstoffe, z.B. Mergal K9N® (Riedel) oder Cobate C®, in den üblichen Anwendungskonzentrationen für die jeweils speziell eingesetzten Mittel.

Als Verdicker kommen in der Regel alle für Pflanzenschutzmittel verwendeten oder geeigneten Verdicker in Frage, beispielsweise anorganische (mineralische) Verdicker wie Verdicker auf Aluminiumsilikatbasis oder Verdicker anderen Typs wie organische Verdickungsmittel, beispielsweise Agar-Agar, Carrageen, Tragant, Gummi arabicum, Alginate, Pektine, Polyose, Guar-Mehl, Johannisbrotbaum-Kernmehl, Stärke, Dextrine, Celluloseether wie Carboxymethylcellulose und Hydroxyethylcellulose, Polyacryl- und Polymethacrylverbindungen, Vinylpolymere, Polyether oder Polyamide.

Als Verdicker kommen solche auf Aluminiumsilikatbasis in Frage beispielsweise solche wie Hectorite, Montmorillonite, Saponite, Kaolinite, Bentonite, Attapulgite etc. in Frage. Beispiele für derartige Verdicker sind die Attagele® von Engelhardt Corp, z.B. Attagel 50, ein Magnesium-Aluminium-Hydrosilikat (Attapulgit) oder die ®Bentone-Reihe von Elementis wie ®Bentone EW, ein Magnesium-Aluminium-Hydrosilikat (Bentonit), oder andere Kieselsäurederivate (z. B ®Bentone 38, ein Schichtsilikat auf Basis eines organisch modifizierten Smektits).

Außerdem kommen organische Verdicker in Frage. Beispiele für bevorzugte organische Verdicker sind Xanthane (Heteropolysaccharide) wie die Rhodopol®-Produkte von Rhodia, z.B. Rhodopol 50 MC (Xanthan-Gummi) oder Rhodopol 23 (ein Xanthan Heteropolysaccharid).

Die Verdicker können auch in Kombination eingesetzt werden. Dabei können auch Kombinationen von organischen und mineralischen Verdickern zweckmäßig sein.

Der zweckmäßige Anteil an Verdickern hängt von der Viskosität der Formulierung und den einzelnen Verdickern ab und beträgt im Allgemeinen beispielsweise 0,001 bis 10 Gew.-%, vorzugsweise 0,005 bis 5 Gew.-% bezogen auf das Gewicht der Formulierung. Der Anteil an Verdickern auf Aluminiumsilikatbasis in den erfindungsgemäßen Öldispersionen beträgt vorzugsweise 0,01 bis 5 Gew.-%, bevorzugt 0,1 bis 3,5 Gew.-%. Bei Verdickern vom Xanthan-Typ beträgt der Anteil vorzugsweise 0,001 bis 5 Gew.-%, insbesondere 0,005 bis 1 Gew.-%.

Die mit dem erfindungsgemäßen Tensid/Lösungsmittel-System hergestellten Formulierungen und Spritzbrühen weisen bei der Anwendung auch biologisch vorteilhafte Resultate auf. So wird beobachtet, dass die biologische Aktivität der eingesetzten Wirkstoffe (a1) bis (a4) in den erfindungsgemäßen Formulierungen teilweise in synergistischer Weise gesteigert ist.

Die Formulierungen erlauben die effektive Kontrolle einer größeren Zahl wirtschaftlich wichtiger Schadpflanzen. Darunter sind typische monokotyle und dikotyle Schadpflanzen, die in Rübenkulturen vorkommen, beispielsweise Pflanzen der Arten:
Aethusa cynapium, Amaranthus retroflexus, Atriplex patula, Brassica sp., Capsella bursa pastoris, Chenopodium album, Echinocloa crus-galli, Fumaria officinalis, Galinsoga parviflora, Galium aparine, Lamium amplexicaule, Lamium purpureum, Matricaria chamomilla, Mercurialis annua, Myosotis arvensis, Poa annua, Polygonum aviculare, Polygonum convolvulus, Polygonum lapathifolium, Polygonum persicaria, Sinapis arvensis, Solanum nigrum, Sonchus arvensis, Stellaria media, Thlaspi arvense, Urtica urens, Veronica arvensis, Veronica hederifolia, Veronica persica und Viola arvensis.

In den folgenden Beispielen A) und B) beziehen sich Mengenangaben auf das Gewicht, sofern nichts anderes angegeben ist.
A) Herstellungsbeispiele
In der Tabelle 1 sind die Zusammensetzungen für Öldispersionskonzentrate (Herstellungsbeispiele F1 bis F11) angegeben. Die jeweils leicht in Wasser dispergierbaren Öldispersionskonzentrate wurden erhalten, indem man die Komponenten unter Erwärmen mischt und nach Abkühlen in einer Rührwerkskugelmühle auf eine Feinheit von im Mittel etwa 4 µm vermahlt.

**Tabelle 1: Stabile Öldispersionen**

| | Beispiel (Nr.) / Anteile der Komponenten in Gew.-% | | | | | | | | | | |
|---|---|---|---|---|---|---|---|---|---|---|---|
| | F1 | F2 | F3 | F4 | F5 | F6 | F7 | F8 | F9 | F10 | F11 |
| Komp. | | | | | | | | | | | |
| (a1) | 4,7 | 4,3 | 4,3 | 3,0 | 3,0 | 3,0 | 3,0 | 6,7 | 6,7 | 3,0 | 3,0 |
| (a2) | 6,0 | 5,5 | 5,5 | 5,5 | 5,5 | 6,7 | 6,7 | 3,0 | 3,0 | 4,3 | 4,3 |
| (a3) | 7,5 | 6,9 | 6,9 | 8,0 | 8,0 | 6,7 | 6,7 | 6,7 | 6,7 | 9,2 | 9,2 |
| (a4) | 2,7 | 4,9 | 2,5 | 2,5 | 4,9 | 2,5 | 4,9 | 2,5 | 4,9 | 2,5 | 4,9 |
| (b1-1) | 19,4 | 19,4 | 19,4 | 19,4 | 19,4 | 19,4 | 19,4 | 19,4 | 19,4 | 19,4 | 19,4 |
| (b1-2) | 4,3 | 4,3 | 4,3 | 4,3 | 4,3 | 4,3 | 4,3 | 4,3 | 4,3 | 4,3 | 4,3 |
| (b2-1) | 21,6 | 21,6 | 21,6 | 21,6 | 21,6 | 21,6 | 21,6 | 21,6 | 21,6 | 21,6 | 21,6 |
| (b2-2) | 2,1 | 2,1 | 2,1 | 2,1 | 2,1 | 2,1 | 2,1 | 2,1 | 2,1 | 2,1 | 2,1 |
| (c1-1) | 30,7 | 30,0 | 32,4 | 32,6 | 30,2 | 32,7 | 30,3 | 32,7 | 30,3 | 32,6 | 30,2 |
| (e-1) | 1,0 | 1,0 | 1,0 | 1,0 | 1,0 | 1,0 | 1,0 | 1,0 | 1,0 | 1,0 | 1,0 |

Abkürzungen zu Tabelle 1:
Komp. = Komponente
(a1) = Desmedipham
(a2) = Phenmedipham
(a3) = Ethofumesate
(a4) = Lenacil
(b1-1) = Ethoxyliertes Tri-(sec.-butyl)-phenol mit 6 EO-Einheiten, nichtionogenes Tensid
(b1-2) = phosphatiertes Phenolethoxylat mit 4 EO-Einheiten, freie Säure, anionaktives Tensid
(b2-1) = Ethoxyliertes Ricinusöl mit 40 EO-Einheiten, nichtionogenes Tensid,
(b2-2) = phosphatierter ethoxylierter Isotridecylalkohol mit 20 EO-Einheiten, anionaktives Tensid
(c1-1) = Tri(butoxyethyl)-sulfat
(e-1) = Verdicker, Kieselsäurederivat (Schichtsilikat auf Basis eines organisch modifizierten Smektits)

Beispiel F12: Vergleichsbeispiel (EC-Formulierung):

Eine Formulierung gemäß Beispiel 1 wurde als Emulsionskonzentrat ohne die Herbizidkomponente Lenacil hergestellt. Die Anteile der Komponenten im Emulsionskonzentrat betrugen 4,7 Gew.-% (a1), 6,0 Gew.-% (a2), 7,5 Gew.-% (a3), 19,4 Gew.-% (b1-1), 4,3 Gew.-% (b1-2), 21,6 Gew.-% (b2-1), 2,1 Gew.-% (b2-2) und 31,7 Gew.-% (c1-1). Die verwendeten Abkürzungen (a1) bis (c1-1) haben die Bedeutungen, wie zu den Beispielen F1 bis F11 erläutert.
Das Vergleichsbeispiel (Beispiel F12) wird in den biologischen Beispielen verwendet.
B) Biologische Beispiele
1. Herstellung der Spritzbrühen
Es wurde eine Wasseraufwandmenge von 300 1/ha vorgelegt. Anschließend wurden die Herbizide gemäß der in Tabellen 2 und 3 (siehe weiter unten) angegebenen Art und Aufwandmengen unter Rühren zugegeben, so dass eine homogene Spritzbrühe entstand. In Tankmischungen wurde Lenacil als Standardformulierung eingesetzt (Venzar®, DuPont, ein 80 prozentiges wasserdispergierbares Pulver).
2. Biologische Versuche

**Die nachfolgend verwendeten Abkürzungen bedeuten:**

| | | |
|---|---|---|
| AS | = | Aktivsubstanz (bezogen auf 100% Wirkstoff), gleichbedeutend |
| | | mit a. i. = active ingredient |
| g AS/ha | = | Gramm Aktivsubstanz/Hektar |
| F(Nr.) | = | Herstellungsbeispiel F(Nr.) aus Abschnitt A) |
| Venzar | = | ®Venzar (Lenacil straight, WP80, DuPont) |
| I/ha | = | Liter/Hektar |
| PMP | = | Phenmedipham |
| DMP | = | Desmedipham |
| ETH | = | Ethofumesate |
| LEN | = | Lenacil |
| BEAVA | = | Beta vulgaris (Zuckerrübe) |
| BRSNW | = | Brassica napus |
| POAAN | = | Poa annua |
| MATCH | = | Matricaria chamomilla |
| AMARE | = | Amaranthus retroflexus |
| STEME | = | Stellaria media |
| CHEAL | = | Chenopodium album |
| GALAP | = | Galium aparine |

Pflanzensamen wurden in einer Tiefe von 1 cm ausgesät und in einer Klimakammer (12 h Licht, Temperatur Tag: 18°C, Nacht: 11 °C) bis zum Wuchsstadium BBCH 10 bis BBCH 11 kultiviert. Die Pflanzen wurden auf einer Laborspritzbahn mit Spritzbrühen der Herbizide behandelt. Die Wasseraufwandmenge für die Spritzapplikation betrug 300 I/ha. Nach der Behandlung wurden die Pflanzen wieder in der Klimakammer aufgestellt.
2.1 Kombinationen von (a1) bis (a3) PMP/DMP/ETH mit (a4) LEN
21 Tage nach der Applikation wurde das Maximum der Schäden an BEAVA erreicht und bewertet, die Wirksamkeit gegen die Unkräuter wurde 14 Tage nach der Spritzung bestimmt. Die Herbizidwirkung wurde gemäß einer Skala von 0 bis 100 % bewertet: 0 %= keine erkennbare Wirkung im Vergleich zu unbehandelten Pflanzen, 100 %= alle Pflanzen abgetötet.
Die Auswertungen ergaben die in Tabellen 2 und 3 aufgeführten Resultate, die deutlich die synergistische Wirkung von Lenacil auf die Wirkstoffkombination PMP/DMP/ETH zeigen, wenn die vier Wirkstoffe entsprechend Beispiel 1 aus Tabelle 1 formuliert sind. Zudem führt die gemeinsame Formulierung der vier Wirkstoffe nach Beispiel F1 aus Tabelle 1 zu deutlich weniger Schäden, als eine externe Zumischung von Lenacil in der Tankmischung zu der EC Formulierung gemäß Vergleichsbeispiel (Abschnitt A, Herstellungsbeispiel F12).

**Tabelle 2**

| Versuch / Produkt | Dosis [g AS/ha] | | | | Schaden an BEAVA [%] | Wirksamkeit gegen Unkräuter* [%] |
|---|---|---|---|---|---|---|
| | PMP | DMP | ETH | LEN | | |
| unbehandelt | | | | | 0 | 0 |
| Venzar | | | | 81 | 0 | 0 |
| F12 | 180 | 141 | 225 | | 10 | 87 |
| F12 + Venzar | 180 | 141 | 225 | 81 | 25 | 85 |
| F1 | 180 | 141 | 225 | 81 | 10 | 91 |

| | | | | | | |
|---|---|---|---|---|---|---|
| *Mittelwert aus BRSNW, POAAN, MATCH, AMARE, STEME, CHEAL, GALAP | | | | | | |

**Tabelle 3**

| Versuch / Produkt | Dosis [g AS/ha] | | | | Schaden an BEAVA [%] | Wirkung gegen BRSNW [%] | Wirkung gegen AMARE [%] | Wirkung gegen STEME [%] |
|---|---|---|---|---|---|---|---|---|
| | PMP | DMP | ETH | LEN | | | | |
| unbehandelt | | | | | 0 | 0 | 0 | 0 |
| Venzar | | | | 27 | 0 | 0 | 0 | 0 |
| F12 | 60 | 47 | 75 | | 0 | 50 | 96 | 84 |
| F12 + Venzar | 60 | 47 | 75 | 27 | 10 | 45 | 96 | 73 |
| Beispiel F1 | 60 | 47 | 75 | 27 | 0 | 63 | 99 | 93 |

2.2 Vergleichsversuche mit Kombinationen von (a1) bis (a3) PMP/DMP/ETH und (a4) LEN
In weiteren Gewächshausversuchen wurden die Formulierungen aus Abschnitt A (Herstellungsbeispiele F1 und F12) alleine bzw. mit Venzar im Tankmix-Verfahren kombiniert in Wasser eingemischt und im Nachauflaufverfahren gegen einige Schadpflanzen bzw. auf Schadwirkung an Zuckerrübe jeweils im Wuchsstadium 10 bis 11 getestet. Die Bewertung der herbiziden Wirkung erfolgte entsprechend Abschnitt B) Beispiel 2.1. Die Ergebnisse sind in den Tabellen 4 bis 10 zusammengestellt.

**Tabelle 4: Herbizide synergistische Wirkung im Nachauflauf**

| Versuch / Formulierung | Wirkstoffe / Aufwandmenge [AS/ha] | Wirkung [%] an AMARE | Wirkung [%] an STEME |
|---|---|---|---|
| F1 | 47 g (a1) + 60g (a2) + 75g (a3) + 27 g (a4) (Ready-mix) | 95 | 93 |
| Venzar | 27 g (a4) (Lenacil straight) | 0 | 0 |
| F12 | 47 g (a1) + 60 g (a2) + 75 g (a3) (Ready-mix) | 75 | 84 |

| | | | |
|---|---|---|---|
| Zu Tabelle 4: Die Bewertung erfolgte 21 Tage nach Applikation | | | |

**Tabelle 5: Herbizide synergistische Wirkung im Nachauflauf**

| Versuch / Formulierung | Wirkstoffe / Aufwandmenge [AS/ha] | Wirkung [%] an BRSNW |
|---|---|---|
| F1 | 94g (a1) + 120g (a2) + 150g (a3) + 54 g (a4) (Ready-mix) | 80 |
| Venzar | 54 g (a4) (Lenacil straight) | 0 |
| F12 | 94g (a1) + 120g (a2) + 150g (a3) (Ready-mix) | 63 |

| | | |
|---|---|---|
| Zu Tabelle 5: Die Bewertung erfolgte 10 Tage nach Applikation | | |

**Tabelle 6: Herbizide synergistische Wirkung im Nachauflauf**

| Versuch / Formulierung | Wirkstoffe / Aufwandmenge [AS/ha] | Wirkung [%] an | | |
|---|---|---|---|---|
| | | BRSNW | MATCH | CHEAL |
| F1 | 141g (a1) + 180g (a2) + 225 g (a3) + 81 g (a4) (Ready-mix) | 92 | 100 | 88 |
| Venzar | 81 g (a4) (Lenacil straight) | 0 | 0 | 0 |
| F12 | 141g (a1) + 180g (a2) + 225 g (a3) (Ready-mix) | 68 | 70 | 75 |

| | | | | |
|---|---|---|---|---|
| Zu Tabelle 6: Die Bewertung erfolgte 21 Tage nach Applikation | | | | |

**Tabelle 7: Herbizide Wirkung und Selektivität im Nachauflauf**

| Versuch / Formulierung | Wirkstoffe / Aufwandmenge [AS/ha] | Schadwirkung [%] an BEAVA | Herbizide Wirkung [%] an AMARE |
|---|---|---|---|
| F1 | 47g (a1) + 60g (a2) + 75 g (a3) + 27 g (a4) (Ready-mix) | 0 | 95 |
| F12 + Venzar | Tankmischung von 47g (a1) + 60g (a2) + 75 g (a3) (Ready-mix) + 27 g (a4) (Lenacil straight) | 10 | 65 |

| | | | |
|---|---|---|---|
| Zu Tabelle 7: Die Bewertung erfolgte 21 Tage nach Applikation | | | |

**Tabelle 8: Herbizide Wirkung im Nachauflauf**

| Versuch / Formulierung | Wirkstoffe / Aufwandmenge [AS/ha] | Herbizide Wirkung [%] an POLCO | Herbizide Wirkung [%] an STEME |
|---|---|---|---|
| F1 | 47g (a1) + 60g (a2) + 75 g (a3) + 27 g (a4) (Ready-mix) | 90 | 93 |
| F12 + Venzar | Tankmischung von 47g (a1) + 60g (a2) + 75 g (a3) (Ready-mix) + 27 g (a4) (Lenacil straight) | 81 | 73 |

| | | | |
|---|---|---|---|
| Zu Tabelle 8: Die Bewertung erfolgte 10 Tage nach Applikation | | | |

**Tabelle 9: Herbizide Wirkung im Nachauflauf**

| Versuch / Formulierung | Wirkstoffe / Aufwandmenge [AS/ha] | Herbizide Wirkung [%] an | | |
|---|---|---|---|---|
| | | BRSNW | POAAN | GALAP |
| F1 | 94g (a1) + 120g (a2) + 150 g (a3) + 54 g (a4) (Ready-mix) | 80 | 60 | 85 |
| F12 + Venzar | Tankmischung von 94g (a1) + 120g (a2) + 150 g (a3) (Ready-mix) + 54 g (a4) (Lenacil straight) | 63 | 33 | 75 |

| | | | | |
|---|---|---|---|---|
| Zu Tabelle 9: Die Bewertung erfolgte 10 Tage nach Applikation | | | | |

**Tabelle 10: Selektivitätsverbesserung im Nachauflauf**

| Versuch / Formulierung (a1)+(a2)+(a3) + (a4) | Wirkstoffe | Schadwirkung [%] an BEAVA bei Aufwandmenge [g AS/ha] | | | | |
|---|---|---|---|---|---|---|
| | | 91 + 14 | 182 +27 | 364 +54 | 546 +81 | 728 + 108 |
| F1 | (a1)+(a2)+(a3)+(a4) (Ready-mix) | 0 | 0 | 5 | 10 | 15 |
| F12 + Venzar | Tankmischung: (a1)+(a2)+(a3) (Ready-mix) + (a4) (Lenacil straight) | 5 | 10 | 15 | 25 | 30 |

| | | | | | | |
|---|---|---|---|---|---|---|
| Zu Tabelle 10: Die Bewertung erfolgte 21 Tage nach Applikation | | | | | | |

## Patentansprüche

1. Herbizide Öldispersionen, **dadurch gekennzeichnet, dass** sie
(a) ein oder mehrere Biscarbamat-Herbizide der Formeln (a1) und (a2), 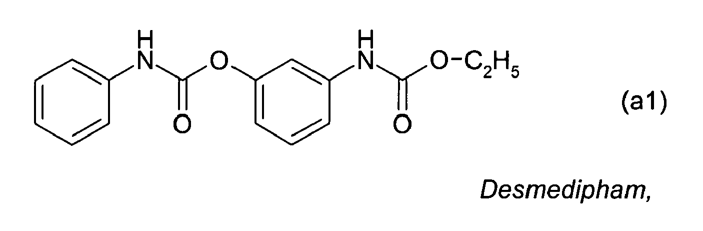 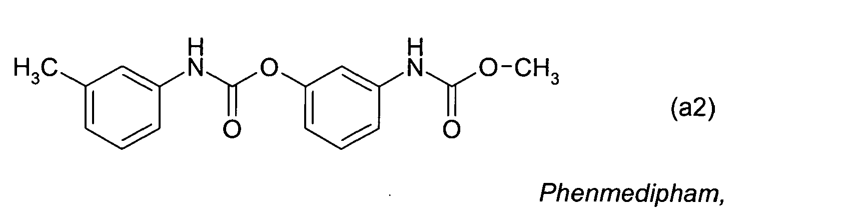 ein oder mehrere Herbizide vom Typ der Benzofuransulfonate, wie Ethofumesate (a3), 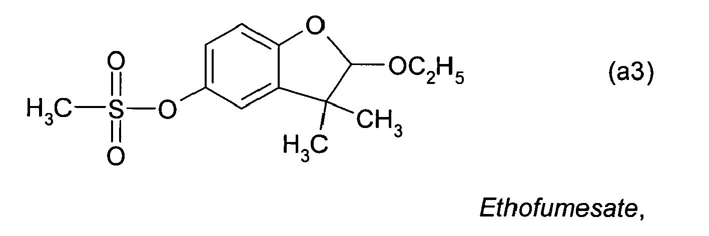 und Lenacil (a4) der Formel 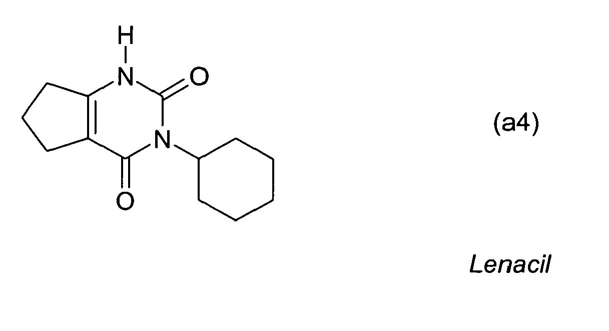
(b) ein oder mehrere Tenside,
(c) ein oder mehrere möglichst polare, zugleich aber wasserunlösliche oder bis 5 g/l in Wasser lösliche Verbindungen aus der Gruppe der vollständig veresterten organische Phosphate und vollständig veresterten Phosphonate als Lösungsmittel,
(d) gegebenenfalls weitere organische Lösungsmittel
(e) gegebenenfalls weitere übliche Formulierungshilfsmittel,
(f) gegebenenfalls Wasser enthalten.

2. Öldispersionen gemäß Anspruch 1, **dadurch gekennzeichnet, dass** sie ein oder mehrere Tenside (b) auf Basis carbocyclischer Aromaten (b1) oder auf nicht aromatischer Basis (b2) oder ein Gemisch aus Tensiden auf aromatischer und nicht aromatischer Basis (b1) bzw. (b2) enthalten.

3. Öldispersionen gemäß Anspruch 1 oder 2, **dadurch gekennzeichnet, dass** sie ein oder mehrere Tenside (b) auf Basis carbocyclischer Aromaten (b1) aus der Gruppe
(b1.1) Phenole, Phenyl-(C₁-C₄)alkyl-ether oder (poly)alkoxylierte Phenole, (b1.2) (Poly)alkylphenole oder (Poly)alkylphenolalkoxylate,
(b1.3) Polyarylphenole oder Polyarylphenolalkoxylate,
(b1.4) Verbindungen, die formal die Umsetzungsprodukte der unter (b1.1) bis (b1.3) beschriebenen Moleküle mit Schwefelsäure oder Phosphorsäure darstellen und deren mit geeigneten Basen neutralisierte Salze und
(b1.5) saure und mit geeigneten Basen neutralisierte (Poly)alkyl- und (Poly)aryl-benzolsulfonate
enthalten.

4. Öldispersionen gemäß einem der Ansprüche 1 bis 3, **dadurch gekennzeichnet, dass** es ein oder mehrere Tenside auf Aromatenbasis (b1) aus der Gruppe
- mit 4 bis 10 mol Ethylenoxid umgesetztes Phenol,
- mit 4 bis 50 mol Ethylenoxid umgesetztes Trüsobutylphenol, Tri-(sec-butyl)-phenol oder Tri-(n-butyl)-phenol,
- mit 4 bis 50 mol Ethylenoxid umgesetztes Nonylphenol,
- mit 4 bis 150 mol Ethylenoxid umgesetztes Tristyrylphenol und
- saures (lineares) Dodecylbenzolsulfonat enthält.

5. Öldispersionen gemäß einem der Ansprüche 1 bis 4, **dadurch gekennzeichnet, dass** es als Komponente (c) einen oder mehrere Verbindungen aus der Gruppe (c1) und (c2) enthält, wobei
(c1) weitgehend wasserunlösliche polare Ester der Phosphorsäure aus der Gruppe enthaltend
(c1.1) Phoshorsäuretriester mit einwertigen Alkanolen mit 5 bis 22 C-Atomen, (c1.2) Phoshorsäuretriester mit Diolen oder Polyolen,
(c1.3) Phoshorsäuretriester mit Aryl-, Alkylaryl-, Poly(alkyl)aryl- und Poly(arylalkyl)arylalkoholen,
(c1.4) Phoshorsäuretriester mit alkoxylierten Alkoholen, die durch Umsetzung der vorstehend unter (c1.1) bis (c1.3) genannten Alkoholkomponenten mit Alkylenoxiden,
(c1.5) Phoshorsäuretriester mit alkoxylierten Alkoholen, die durch Umsetzung einwertiger Alkanole mit 1 bis 4 C-Atomen und Alkylenoxiden erhalten werden, und
(c1.6) Phoshorsäuretriester mit einem Gemisch aus Alkoholen aus zwei oder mehreren der vorstehend unter den Gruppen (c1.1) bis (c1.5) genannten Alkoholkomponenten,
wobei die 3 Alkoholkomponenten des Phosphorsäureesters aus den Gruppen (c1.1) bis (c1.5) jeweils gleiche oder verschiedene sein können und so ausgewählt sind, dass der Ester als weitgehend wasserunlösliches polares Lösungsmittel einsetzbar ist, und
(c2) weitgehend wasserunlösliche und zugleich polare Phosphonate auf Basis von zweifach mit Alkoholen und/oder alkoxylierten Alkoholen veresterten Alkyl-, Aryl-, Alkylaryl-, Poly(alkyl)-aryl- oder Poly(arylalkyl)-aryl-Phosphonsäuren, aus der Gruppe
(c2.1) Diester von Phosphonsäuren mit einwertigen Alkanolen mit 1 bis 22 C-Atomen,
(c2.2) Diester von Phosphonsäuren mit Diolen oder Polyolen,
(c2.3) Diester von Phosphonsäuren mit Aryl-, Alkylaryl-, Poly(alkyl)aryl- oder Poly(arylalkyl)arylalkoholen,
(c2.4) Diester von Phosphonsäuren mit alkoxylierten Alkoholen, die durch Umsetzung der vorstehend unter (c2.1) bis (c2.3) genannten Alkohole mit Alkylenoxiden erhalten werden, oder
(c2.5) Diester von Phosphonsäuren mit einem Gemisch aus Alkoholen aus zwei oder mehreren der vorstehend unter den Gruppen (c2.1) bis (c2.4) genannten Alkoholkomponenten,
wobei die 2 Alkoholkomponenten des Phosphonsäurediesters aus den Gruppen (c2.1) bis (c2.4) jeweils gleiche oder verschiedene sein können und so ausgewählt sind, dass der Ester als weitgehend wasserunlösliches polares Lösungsmittel einsetzbar ist,
bedeuten.

6. Öldispersionen gemäß einem der Ansprüche 1 bis 5, **dadurch gekennzeichnet, dass** die Komponente (c) ausgewählt ist aus einer oder mehreren Verbindungen aus der Gruppe
(c1.7) Phosporsäuretriester mit alkoxylierten kurzkettigen Alkoholen mit 1 bis 22 C-Atomen im Alkylrest und 1 bis 30 Alkylenenoxyeinheiten im Polyalkylenoxyteil,
(c1.8) Phosporsäuretriester mit Alkylalkoholen mit 5 bis 22 C-Atomen und
(c1.9) Phosporsäuretriester auf Basis von teilweise mit gegebenenfalls alkoxylierten Alkoholen mit 1 bis 22 C-Atomen im Alkylrest oder gegebenenfalls alkoxylierten Phenolderivaten, jeweils mit 0 bis 30 Alkylenoxyeinheiten im Polyalkylenoxy-teil teilweise veresterter ortho-Phosphorsäure, wobei die verbleibenden OH-Valenzen der ortho-Phosphorsäure nachfolgend alkoxyliert wurden.

7. Öldispersionen gemäß einem der Ansprüche 1 bis 6, **dadurch gekennzeichnet, dass** die Komponente (c) Tributoxyethylphosphat bedeutet.

8. Öldispersionen gemäß einem der Ansprüche 1 bis 7, **dadurch gekennzeichnet, dass** sie
(a) 1 bis 50 Gew.-% Wirkstoffe (a1) bis (a4),
(b) 3 bis 70 Gew.-% Tenside,
(c) 5 bis 70 Gew.-% Phosphorsäuretriester oder Phosphonsäurediester,
(d) 0 bis 40 Gew.-% weitere Lösungsmittel,
(e) 0 bis 20 Gew.-% weitere übliche Formulierungshilfsmittel,
(f) 0 bis 20 Gew.-% Wasser enthalten.

9. Öldispersionen gemäß einem der Ansprüche 1 bis 8, **dadurch gekennzeichnet, dass** sie
(a) 10 bis 40 Gew.-% Wirkstoffe (a1) bis (a4),
(b) 5 bis 70 Gew.-% Tenside,
(c) 10 bis 70 Gew.-% Phosphorsäuretriester oder Phosphonsäurediester,
(d) 0 bis 40 Gew.-% weitere Lösungsmittel und
(e) 0 bis 20 Gew.-% weitere übliche Formulierungshilfsmittel enthalten.

10. Öldispersion gemäß einem der Ansprüche 1 bis 9, **dadurch gekennzeichnet, dass** sie die Wirkstoffe (a) im Gewichtsverhältnis [(a1) und (a2)]:(a3):(a4) zu (1):(0,1):(0,01) bis (1):(5):(3) enthält.

11. Verfahren zur Herstellung einer gemäß einem der Ansprüche 1 bis 10 definierten Öldispersion, **dadurch gekennzeichnet, dass** man die Komponenten miteinander vermischt.

12. Verfahren zur Bekämpfung von unerwünschtem Pflanzenwuchs, **dadurch gekennzeichnet, dass** man eine wirksame Menge einer Öldispersion gemäß einem der Ansprüche 1 bis 10, gegebenenfalls nach Verdünnen mit Wasser, auf die Pflanzen, Pflanzenteile oder die Anbaufläche appliziert.

13. Verfahren nach Anspruch 11, **dadurch gekennzeichnet, dass** man Schadpflanzen selektiv in Rübenkulturen bekämpft.

14. Verwendung von Öldispersionen gemäß einem der Ansprüche 1 bis 10 zur Bekämpfung von unerwünschtem Pflanzenwuchs.

15. Verwendung gemäß Anspruch 13 zur selektiven Bekämpfung von Schadpflanzen in Rübenkulturen.
